# EUROPÄISCHE PATENTSCHRIFT

(11) **EP 1 960 735 B1**
(45) Veröffentlichungstag und Bekanntmachung des Hinweises auf die Patenterteilung: **28.09.2011**
(21) Anmeldenummer: 06775698.1
(22) Anmeldetag: 07.07.2006
(51) Int. Cl.: G01C 15/00, G01C 7/06

(54) **VORRICHTUNG ZUM VERMESSEN VON ZWEIDIMENSIONALEN KONTUREN**
DEVICE FOR MEASURING TWO-DIMENSIONAL CONTOURS
DISPOSITIF DE MESURE DE CONTOURS EN DEUX DIMENSIONS

(30) Priorität: 08.07.2005 DE 202005011055 U
(43) Veröffentlichungstag der Anmeldung: 27.08.2008
(73) Patentinhaber: Trimble Germany GmbH, 06116 Halle (Saale) (DE)
(72) Erfinder: BIERWIRTH, Horst, 34326 Morschen (DE)
(74) Vertreter: Gulde Hengelhaupt Ziebig & Schneider
(86) Internationale Anmeldenummer: PCT/DE2006/001198
(87) Internationale Veröffentlichungsnummer: WO 2007/006287

(56) Entgegenhaltungen:
- EP-A1- 0 881 462
- CH-A5- 692 524
- DE-U1- 29 805 709
- JP-A- 2003 329 453

## Beschreibung

Die Erfindung betrifft eine Vorrichtung der im Oberbegriff des Anspruchs 1 angegebenen Gattung.

Die genaue Erfassung der Dimensionen eines Fensters oder einer Tür stellt auch heute noch ein Problem dar. Insbesondere bei Schrägfenstein oder Fenstern bzw. Türen mit Rundbögen od. dgl. ist es schwierig, die Konturen der Leibungen mit der für einen Tür- oder Fensterbauer erforderlichen Genauigkeit schnell und in einer maschinenlesbaren Weise zu erfassen. Es sind zwar bereits zahlreiche Einrichtungen vorgeschlagen worden, die diese Arbeiten erleichtern sollen (z. B. DE 93 17 691 U1, DE 297 12 371 U1), doch liefert keine dieser Einrichtungen Daten, die von einer automatisch arbeitenden Maschine unmittelbar weiter verarbeitet werden können.

Für den speziellen Fall der Vermessung von Treppenflächen ist eine Vorrichtung bekannt (EP 0 881 462 A1), die ein Gehäuse mit einem darin drehbar gelagerten Lasermessgerät sowie mit Positionierungsflächen aufweist, die mit den Setz- und Trittstufen einer Treppe zusammenwirken. Ein Vorteil dieser Vorrichtung besteht darin, dass sie die automatische Erfassung und Speicherung von elektrisch ermittelten Messdaten ermöglicht. Diese Messdaten können daher leicht in Daten umgewandelt werden, die von einem zur Herstellung von Trittstufen geeigneten Automaten gelesen und von diesem unmittelbar zur Herstellung der benötigten Trittstufen verwendet werden können. Zur Vermessung beliebiger Konturen von Leibungen in Maueröffnungen oder von Wänden, Decken od. dgl. ist diese Vorrichtung allerdings nicht ohne weiteres geeignet.

Weiterhin ist ein optisches Mess- und Anzeigegerät, insbesondere Lasergerät, gemäß DE 298 05 709 U1 bekannt. Das Gerät lässt sich über ein verstellbares Gestell im Winkellager positionieren. Dazu besteht das Gestell aus zwei horizontalen Auslegern, die gegenüber einem Gehäuse um die Längsachse gedreht werden können. An den Auslegerenden befinden sich jeweils verstellbare Auflager, bestehend z.B. aus Klötzen mit einer Spindel und einem Handdrehrad. Am Gehäuse sind zwei feste Auflager angeordnet, die in der jeweiligen Winkellage den Fixpunkt gegenüber den verstellbaren Auflagern bilden. Das Gerät ist in Winkellagen über eine Dreipunktauflage einrichtbar.

Der Erfindung liegt daher das technische Problem zugrunde, die Vorrichtung der Der Erfindung liegt daher das technische Problem zugrunde, die Vorrichtung der eingangs bezeichneten Gattung so auszubilden, dass sie insbesondere zur Vermessung der Konturen von Wänden, Decken, Leibungen od. dgl. geeignet ist und dabei leicht gehandhabt werden kann.

Zur Lösung dieser Aufgabe dienen die kennzeichnenden Merkmale des Anspruchs 1.

Durch die Erfindung wird erstmals eine Vorrichtung geschaffen, die mit der einen oder anderen Standfläche und damit ohne weitere Hilfsmittel als Ganzes so auf einer vorzugsweise ebenen Unterlage, z. B. einer Fensterbank, dem Fußboden eines Raums od. dgl. angeordnet werden kann, dass die Drehachse für das Lasermessgerät wahlweise horizontal oder vertikal ausgerichtet ist. Eine vertikale Anordnung der Drehachse wird beispielsweise beim Vermessen einer Wand, eines Erkers, einer Sockelleiste od. dgl. benutzt, während sich eine horizontale Lage der Drehachse insbesondere zur Vermessung von Fenster- und Türleibungen, Decken od. dgl. eignet. Durch Drehen des Lasermeßgeräts mit Hilfe des Drehmittels um beispielsweise 180° kann auf einfachste Weise eine über diesen Bereich erstreckte Kontur vermessen werden.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 die Draufsicht einer erfindungsgemäßen Vorrichtung;
Fig. 2 eine perspektivische Darstellung der Vorrichtung nach Fig. 1, von hinten her gesehen;
Fig. 3 die Anwendung der Vorrichtung nach Fig. 1 und 2 zur Vermessung der Kontur einer Fensterleibung.
Fig. 4 bis 6 schematische, perspektivische Darstellungen der mit einem zusätzlichen Stativ versehenen Vorrichtung nach Fig. 1 und 2 bei vertikaler Anordnung einer Drehachse;
Fig. 7 eine Ansicht der Vorrichtung entsprechend Fig. 4 bis 6 zur schematischen Darstellung ihres Messbereichs;
Fig. 8 schematisch die Vorrichtung nach Fig. 7 bei ihrer Anwendung zur Vermessung einer Wandkontur;
Fig. 9 schematisch eine Vielzahl von mit der Vorrichtung nach Fig. 8 erhaltenen Messpunkten;
Fig. 10 eine der Fig. 7 entsprechende Darstellung der Vorrichtung, jedoch bei horizontaler Anordnung der Drehachse; und
Fig. 11 schematisch die Vorrichtung nach Fig. 10 bei ihrer Anwendung zur Vermessung einer Deckenkontur.

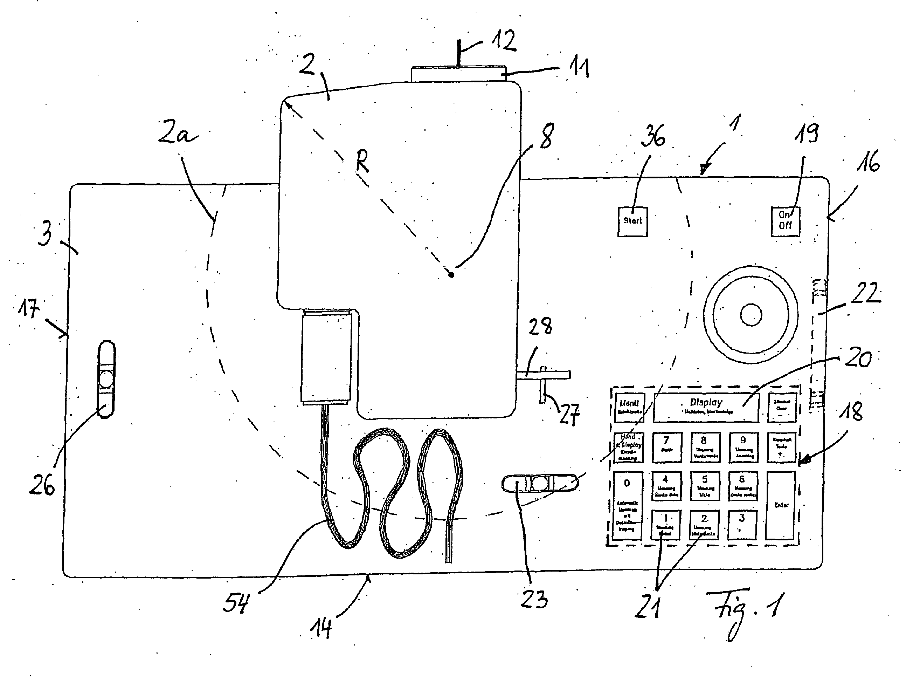

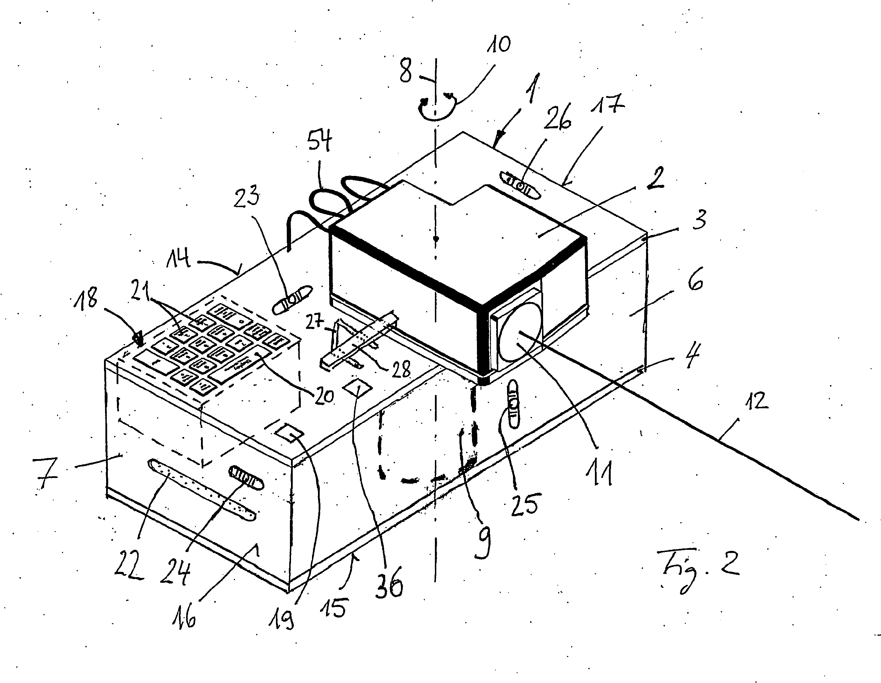

Nach Fig. 1 und 2 enthält eine erfindungsgemäße Vorrichtung zum Vermessen von zweidimensionalen Konturen einen Grundkörper 1, der als Träger eines Lasermessgeräts 2 und weiterer Bauelemente dient und zweckmäßig als ein zumindest teilweise geschlossenes Gehäuse ausgebildet ist. Im Ausführungsbeispiel enthält der Grundkörper 1 zwei planparallele, rechteckige Platten 3 und 4, die parallel und mit Abstand voneinander angeordnet und an ihren Rändern durch lange bzw. kurze Seitenwände 6 bzw. 7 zu einem rechtwinklig parallelepipedischen bzw. quaderförmigen Gehäuse miteinander verbunden sind.

Das Lasermessgerät 2 ist auf der Oberseite des Grundkörpers 1 drehbar gelagert, und zwar um eine Drehachse 8, die senkrecht zu den Oberflächen der Platten 3 und 4 steht. Außerdem ist dem Lasermessgerät 2 ein am Grundkörper 1 befestigtes Mittel 9 zum Drehen zugeordnet. Im Ausführungsbeispiel besteht das Mittel 9 aus einem elektrisch antreibbaren Motor, der zwischen den beiden Platten 3 und 4 befestigt ist und eine nicht dargestellte Antriebswelle aufweist. Diese Antriebswelle ist zweckmäßig drehbar in der oberen Platte 3 gelagert, wobei ein kurzes, über die Platte 3 nach außen vorstehendes Ende der Antriebswelle starr mit der Unterseite des Lasermessgeräts 2 verbunden ist. Der Motor 9 besteht vorzugsweise aus einem Reversiermotor, der wahlweise in der einen oder anderen, durch einen Doppelpfeil 10 in Fig. 2 angedeuteten Richtung in Umdrehung versetzt werden kann. Alternativ kann das Mittel 9 natürlich auch anders ausgebildet und montiert sein.

Das Lasermessgerät 2 weist, wie in Fig. 2 vereinfacht dargestellt ist, eine Austrittslinse 11 und eine nicht dargestellte Sensorscheibe auf, die aus einer Vielzahl von lichtempfindlichen Fotodioden od. dgl. gebildet sein kann. Das Lasermessgerät 2 ist außerdem als übliches Entfernungs-Messgerät ausgebildet, das durch die Austrittslinse 11 einen Laserstrahl 12 aussendet, der nach dem Auftreffen auf irgendeinen Gegenstand reflektiert wird. Ein reflektiertes Teilbündel des Laserstrahls 12 trifft dann auf die Sensorscheibe und ermöglicht dadurch eine genaue Ermittlung des Abstands zwischen einem definierten Referenzpunkt des Lasermessgeräts 2 und dem Gegenstand. Dabei ist Anordnung vorzugsweise so getroffen, dass die Achse des Laserstrahls 12 genau senkrecht zur Drehachse 8 verläuft und diese schneidet, so daß der Laserstrahl 12 beim Drehen des Lasermessgeräts 2 im wesentlichen in einer senkrecht zur Drehachse 8 stehenden Ebene bewegt wird.

Handelsübliche Lasermessgeräte 2 zur Messung von Entfernungen arbeiten z. B. nach dem Impulslaufzeit-Verfahren, bei dem die zu messende Entfernung aus dem zeitlichen Abstand eines abgegebenen und eines empfangenen, reflektierten Impulszugs ermittelt wird. Für die Zwecke der Erfindung hat sich beispielsweise ein von der Fa Robert Bosch GmbH, Stuttgart unter der Bezeichnung "DLE 150 Connect" vertriebenes Entfernungsmessgerät als geeignet erwiesen.

Um eine möglichst vielseitige Anwendung und dennoch einfache Handhabung der gesamten Vorrichtung bei der Vermessung von Konturen zu erreichen, ist der Grundkörper 1 mit wenigstens zwei senkrecht zueinander stehenden Standflächen 14, 15 versehen. Die Standfläche 14 wird z. B. von der in Fig. 1 und 2 vorderen, langen Wand 6 und/oder den vorderen Längskanten der Platten 3 und 4 gebildet. Dagegen wird die Standfläche 15 z. B. von der in Fig.1 und 2 unteren Oberfläche der unteren Platte 4 gebildet. Dabei erstreckt sich die Standfläche 14 parallel zur Drehachse 8, während die Standfläche 15 senkrecht zur Drehachse 8 und senkrecht zur Standfläche 14 steht. Daher ist es möglich, die gesamte Vorrichtung mittels der beiden Standflächen 14 und 15 so auf eine horizontale Unterlage aufzulegen, dass die Drehachse 8 entweder horizontal (Standfläche 14) oder vertikal (Standfläche 15) ausgerichtet ist und der Laserstrahl 12 entsprechend in einer senkrecht oder parallel zur Unterlage angeordneten Fläche bewegt werden kann.

Mit besonderem Vorteil weist der Grundkörper 1 wenigstens eine weitere, dritte Standfläche 16 auf, die gemäß Fig. 1 und 2 z. B. von einer der kurzen Wände 7 und/oder den entsprechenden kurzen Endkanten der Platten 3, 4 gebildet ist. Auf der gegenüberliegenden Seite ist zweckmäßig eine weitere, entsprechend ausgebildete Standfläche 17 vorhanden.

Für den Fall, dass die Drehachse 8 parallel zur z-Achse eines in Fig. 2 angedeuteten kartesischen, vorzugsweise rechtwinkligen Koordinatensystems angeordnet ist, verläuft im Ausführungsbeispiel die Standfläche 14 parallel zur yz-Ebene, die Standfläche 15 parallel zur xy-Ebene und die Standfläche 16 bzw. 17 parallel zur xz-Ebene dieses Koordinatensystems.

Wie insbesondere Fig. 1 zeigt, kann das Lasermeßgerät 2 um einen an sich beliebigen Winkel gedreht werden. Vorzugsweise ist die Anordnung so getroffen, daß auf der oberen Platte 3 keine Bauelemente montiert sind, die die freie Drehbarkeit des Lasermeßgeräts 2 behindern könnten. Vorzugsweise ist ein Drehbereich von 180° und mit besonderem Vorteil von 360° vorgesehen. Nach einem weiteren Merkmal der Erfindung beschreibt der am weitesten von der Drehachse 8 entfernte Punkt des Lasermeßgeräts bei dessen Drehung eines Drehkreis 2a, dessen Radius R kleiner ist, als dem Abstand zumindest der Standfläche 14 von der Drehachse 8 entspricht. Mit anderen Worten befindet sich die Standfläche 14 außerhalb des gedachten Drehkreises 2a. Dadurch ist es auch beim Aufstellen des Grundkörpers 1 mit seiner Standfläche 14 möglich, das Lasermeßgerät 2 um 180° oder auch 360° zu drehen, ohne daß sein sicherer Stand gefährdet ist. Entsprechendes gilt zweckmäßig auch im Hinblick auf die Standflächen 16 und 17.

Im oder am Grundkörper 1 ist weiterhin eine nur schematisch angedeutete Steuereinheit 18 untergebracht. Der Steuereinheit 18 sind zum Betrieb der Gesamtvorrichtung benötigte Schalter, insbesondere Ein/Aus-Schalter 19, Anzeigelampen und sonstige Hardwarekomponenten wie z.B. ein Display 20 und eine Tastatur 21 zugeordnet, die zweckmäßig auf oder in der oberen Platte 3 montiert und daher frei zugänglich sind. Weiterhin enthält die Steuereinheit 18 als Hauptbestandteil einen üblichen Mikroprozessor, der an die Tastatur 21 und einen beispielsweise als EPROM ausgebildeten, programmierbaren oder programmierten Programmbaustein angeschlossen ist, in dem das im Einzelfall gewünschte Ablaufprogramm für die erfindungsgemäße Vorrichtung gespeichert wird. Außerdem ist zwischen das Lasermeßgerät 2 und den Mikroprozessor zweckmäßig ein beispielsweise als RAM ausgebildeter Datenspeicher geschaltet, mit dem die vom Lasermeßgerät 2 ermittelten Meß- bzw. Entfernungsdaten automatisch erfaßt und gespeichert werden können. Diese Meßdaten hängen dabei natürlich von der jeweiligen Drehstellung des Lasermeßgeräts 2 ab, die mit dem Mittel 9 hergestellt wird, das über eine Endstufe mit der Steuereinheit 18 verbunden ist und unter der Steuerung des Programmbausteins steht. Mit dem Display 20 können vorgewählte Informationen wie z. B. der gerade bearbeitete Auftrag, eine Kundennummer, die aktuell ermittelte Entfernung usw. angezeigt werden. Schließlich ist mit dem Mikroprozessor eine parallele und/oder serielle Schnittstelle 22 (Fig. 1) verbunden, um die Steuereinheit 18 an ein Datenverarbeitungsgerät wie z.B. einen üblichen Rechner, einen PC, ein Laptop od. dgl. anschließen und/oder die im Datenspeicher befindlichen Meßdaten auf eine Diskette, eine CD od. dgl. überspielen zu können. Im übrigen können die Steuereinheit 18 und die zugehörigen Komponenten vorzugsweise so ausgebildet sein und betrieben werden, wie in EP 0 881 462 A1 ausführlich erläutert ist. Alternativ ist es natürlich auch möglich, die Steuereinheit 18 und die Teile 19 bis 21 ganz oder vollständig als Bestandteile des Lasermeßgeräts 2 auszubilden.

Zur Eichung bzw. exakten Positionierung der beschriebenen Vorrichtung ist der Grundkörper 1 beispielsweise mit einer Mehrzahl von Meßmitteln 23, 24, 25 und 26 versehen, die eine Überprüfung der vertikalen und horizontalen Ausrichtung der Drehachse 8 ermöglichen. Zweckmäßig ist dazu jeder Standfläche 14 bis 17 wenigstens je ein derartiges Meßmittel 23 bis 26 derart zugeordnet, daß von außen her leicht überprüft werden kann, ob die im Einzelfall verwendete Standfläche 14 bis 17 und damit auch die Drehachse 8 exakt horizontal oder vertikal ausgerichtet ist. Die Meßmittel 23 bis 26 bestehen z.B. aus leicht ablesbaren Libellen. Besonders zweckmäßig ist allerdings die Anwendung elektronischer Nivellier- oder Winkelmeßgeräte für diesen Zweck, die eine schnelle und genaue Überprüfung ermöglichen.

Zur Herstellung einer gewünschten Lage der Vorrichtung sind die Standflächen 14 bis 17 vorzugsweise mit verstellbaren Positionierungsmitteln wie z.B. Stellfüßen od. dgl. versehen. Diese ermöglichen es, die Drehachse 8 auch dann vertikal bzw. horizontal auszurichten, wenn für die Standflächen 14 bis 17 nur eine nicht exakt horizontal ausgerichtete Unterlage zur Verfügung steht.

Das Drehmittel 9 für das Lasermeßgerät 2 besteht vorzugsweise aus einem reversierbaren Schritt- oder Servomotor. Dabei ist die Anordnung z.B. so getroffen, daß eine Drehung des Lasermeßgeräts 2 um 180° in 1800 einzelne Schritte unterteilt wird. Hierzü können die für Schritt- und Servomotoren üblichen Steuerungen vorgesehen werden, die in der Steuereinheit 18 bzw. in deren Programmbaustein untergebracht werden.

Zur Herstellung einer ausgewählten Nullstellung des Lasermeßgeräts 2 kann am Grundkörper 1 ein Sensor 27 vorgesehen sein. Im Ausführungsbeispiel besteht dieser Sensor 27 aus einer Lichtschranke mit zwei U-förmig angeordneten, je eine Lichtquelle und eine lichtempfindliche Diode aufweisenden Armen. Dem Sensor 27 ist eine am Lasermeßgerät 2 angebrachte Justierfahne 28 aus einem undurchsichtigen Material zugeordnet, die in einer ausgewählten Drehstellung des Lasermeßgeräts 2 zwischen die beiden Arme der Lichtschranke eingeführt werden kann. Dadurch ist es möglich, das Drehmittel 9 z.B. so zu steuern, daß das Lasermeßgerät 2 genau dann angehalten wird, wenn die Justierfahne 28 gerade den Wirkungsbereich des Sensors 27 verläßt. Diese Position kann in der weiter unten erläuterten Weise als Nullposition des Lasermeßgeräts 2 definiert werden. Der Sensor 27 ist im übrigen zweckmäßig ebenfalls an den Mikroprozessor angeschlossen. Derartige Anordnungen eignen sich insbesondere bei Anwendung eines Drehmittels 9 in Form eines Schrittmotors. Wird dagegen ein z.B. ein Servomotor eingesetzt, dann können der Sensor 27 und die Justierfahne 28 in der Regel entfallen, weil Servomotoren meistens analog oder digital arbeitende Winkelstellungsgeber aufweisen.

Unabhängig davon, ob das Drehmittel 9 mit von der Steuereinheit abgegebenen Schrittimpulsen oder mit Hilfe von zusätzlich vorhandenen Winkelstellungsgebern gesteuert wird, werden für die jeweilige Drehstellung des Lasermeßgeräts 2 charakteristische Daten zusätzlich zu den Entfernungsdaten im Datenspeicher abgelegt, um dadurch jeder genauen Entfernung die zugehörige Drehwinkelstellung des Lasermeßgeräts zuzuordnen.

Die Anwendung der erfindungsgemäßen Vorrichtung zur Vermessung einer zweidimensionalen Kontur wird nachfolgend zunächst am Beispiel einer Leibung 31 erläutert, die eine in einer Mauer 32 ausgebildete Fensteröffnung 33 seitlich begrenzt. Am unteren Ende der Leibung 31 ist eine im wesentlichen horizontale Auflagefläche 34 vorhanden, die z.B. die Oberseite einer bereits installierten Fensterbank 35 ist.

Der Grundkörper 1 wird mit einer ausgewählten Standfläche, hier z.B. der vorderen Standfläche 14, auf die Auflagefläche 34 aufgelegt. Mit Hilfe der zugehörigen Meßmittel (z.B. 23 und 24) wird überprüft, ob die Drehachse 8 dann bereits horizontal angeordnet ist. Ist dies nicht der Fall, wird die Vorrichtung mit Hilfe von Unterlegscheiben od. dgl. oder mit Hilfe von einstellbaren Stellfüßen od. dgl. entsprechend ausgerichtet.

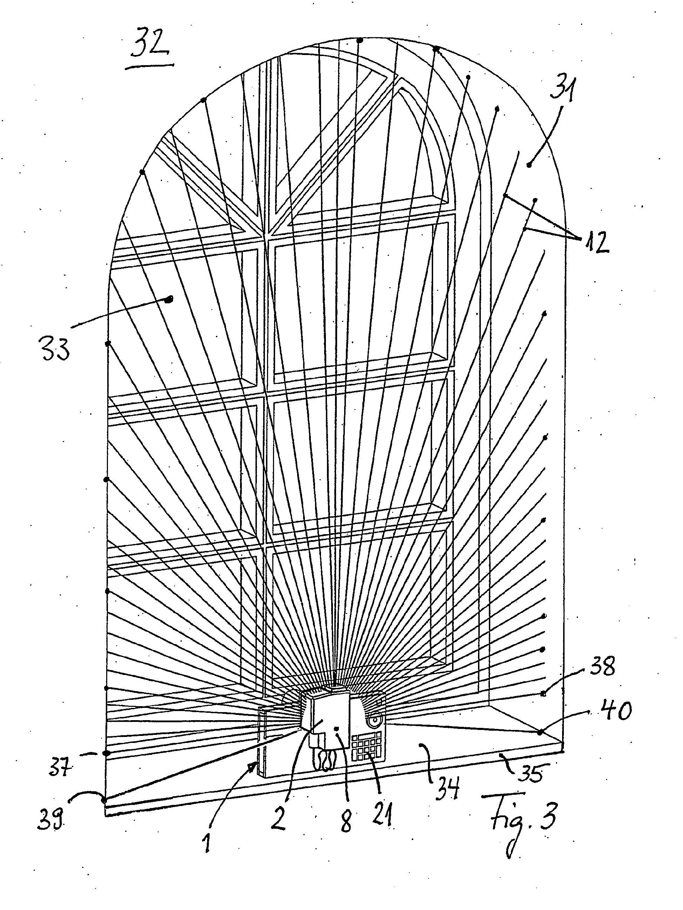

Nachdem der Grundkörper 1 auf diese Weise positioniert worden ist, wird die Steuereinheit 18 mittels des Ein/Aus-Schalters 19 eingeschaltet. Dadurch wird der Mikroprozessor automatisch auf den Programmstart gerichtet. Danach kann mittels der Tastatur 21 bei Bedarf die gewünschte Zahl der Meßschritte eingegeben werden, die z.B. 1800 beträgt, und/oder ein im Programmspeicher vorhandenes Ablaufprogramm ausgewählt werden. Durch Betätigung einer Starttaste 36 wird nun die Motorsteuerung in Gang gesetzt. Hierdurch wird das Drehmittel 9 automatisch so lange vor- bzw. rückwärts gedreht, bis der Sensor 27 (Fig. 1) ein Signal abgibt, das das Erreichen einer vorgewählten Nullposition des Lasermeßgeräts 2 bestätigt. Das ist im gewählten Beispiel diejenige Position, in welcher der vom Lasermeßgerät 2 ausgesandte Laserstrahl 12 horizontal verläuft und z.B. auf einen Punkt 37 (Fig. 3) gerichtet ist, der den Nullpunkt für die nachfolgende Vermessung der Kontur der Leibung 31 bildet. Das Erreichen dieser Nullposition kann z.B. auf dem Display 20 (Fig. 1) zur Anzeige gebracht werden.

Durch erneutes Betätigen der Starttaste 36 wird nun der eigentliche Meßvorgang in Gang gesetzt. In einem ersten Schritt bedeutet das, daß das Lasermeßgerät 2 den Abstand vom Punkt 37 mißt. Der ermittelte Meßwert wird dann zusammen mit einem die O-Stellung angebenden Signal in den Datenspeicher überführt und dort gesichert. Anschließend wird geprüft, ob die Zahl der eingegebenen bzw. festgelegten Meßschritte bereits erreicht ist. Ist dies nicht der Fall, wird das Drehmittel 9 um einen Schritt weitergeschaltet und der dann vom Lasermeßgerät 2 ermittelte Meßwert zusammen mit einem die erreichte Drehstellung anzeigenden Signal wiederum gespeichert. Diese Schritte werden wiederholt, bis alle festgelegten, z.B. 1800 Meßschritte durchgeführt sind, die zugehörigen Meßdaten im Datenspeicher abgelegt sind und das Lasermeßgerät 2 eine Drehstellung einnimmt, in welche der Laserstrahl 12 auf einen Punkt 38 der Leibung 31 gerichtet ist, der dem Punkt 37 diametral gegenüberliegt und nach einer 180°-Drehung erreicht wird.

Die im Datenspeicher gespeicherten Daten können nun z.B. automatisch an einen Rechner überführt, auf einer Diskette od. dgl. gespeichert oder am Display 20 angezeigt werden. Sie geben die Koordinaten der in Fig. 3 teilweise markierten Meßpunkte an, die den Auftreffpunkten des Laserstrahls 12 bei jedem durchgeführten Teilschritt während der Drehung des Lasermeßgeräts 2 entsprechen und ein genaues Abbild der Kontur der Leibung 31 darstellen.

Die mit dem Lasermeßgerät 2 gemessenen Entfernungen werden im Beispiel der Fig. 3 z.B. über die zugehörige Software auf die durch die Punkte 37, 38 verlaufende und die Drehachse 8 schneidende Nullinie bezogen. Zur Konstruktion eines Fensterrahmens reichen die aus Fig. 3 ersichtlichen Meßwerte aus, da z.B. der konstante Abstand zwischen der Nullinie und der Auflagefläche 34 der Fensterbank 35 leicht separat ermittelt und berücksichtigt werden kann. Alternativ wäre es aber auch möglich, das Lasermeßgerät 2 so am Grundkörper 1 zu lagern, daß es um mehr als 180° drehbar ist, um dadurch z.B. bis zu Eckpunkten 39, 40 auch alle diejenigen Punkte erfassen zu können, die unterhalb der Nullinie liegen. Die untere Begrenzung des Fensterrahmens ergibt sich dann aus der Verbindungslinie der Eckpunkte 39 und 40.

Ein besonderer Vorteil der erfindungsgemäßen Vorrichtung besteht darin, daß das Lasermeßgerät 2 nicht exakt im Mittelpunkt zwischen den Punkten 37, 38 stehen und daher die Vorrichtung nicht exakt in der Mitte der Leibung 31 positioniert werden muß. Da das Lasermeßgerät 2 entsprechend Fig. 3 sowohl eine Messung in Richtung des Winkels 0° als auch eine Messung in Richtung des Winkels 180° durchführt, kann durch Halbierung der Summe der beiden in diesen Richtungen erhaltenen Entfernungsmessungen bei Bedarf stets der Mittelpunkt der Nullinie genau ermittelt werden. Auch diese Berechnung kann am einfachsten mittels einer entsprechenden Software automatisch durchgeführt werden, so daß die Vermessung der Leibungskontur bis auf die oben erläuterte Positionierung der Vorrichtung vollautomatisch und daher sehr viel schneller als manuell mit Hilfe eines Meßstabs od. dgl. erfolgen kann. Da bei der Herstellung der Fensterrahmen außerdem mit Toleranzen von einigen Millimetern gearbeitet werden kann, brauchen die Messungen mit keiner höheren Genauigkeit durchgeführt werden, was die Vermessungsarbeit weiter erleichtert. Außerdem können die Meßdaten vollautomatisch in Daten umgewandelt werden, die von zur Herstellung der Fensterrahmen geeigneten Automaten lesbar sind. Dies ermöglicht es einer mit der Herstellung von Fenstern beauftragen Firma, die Leibung 31 schnell und sicher zu vermessen und die Meßdaten dann mittels einer Diskette od. dgl. zum Herstellungsautomaten zu überführen.

In entsprechender Weise kann vorgegangen werden, wenn die Leibungskontur einer Tür zu vermessen ist. In diesem Fall wird der Grundkörper 1 zweckmäßig am Boden des mit der Tür zu versehenen Raumes, auf einer Türschwelle od. dgl. angeordnet.

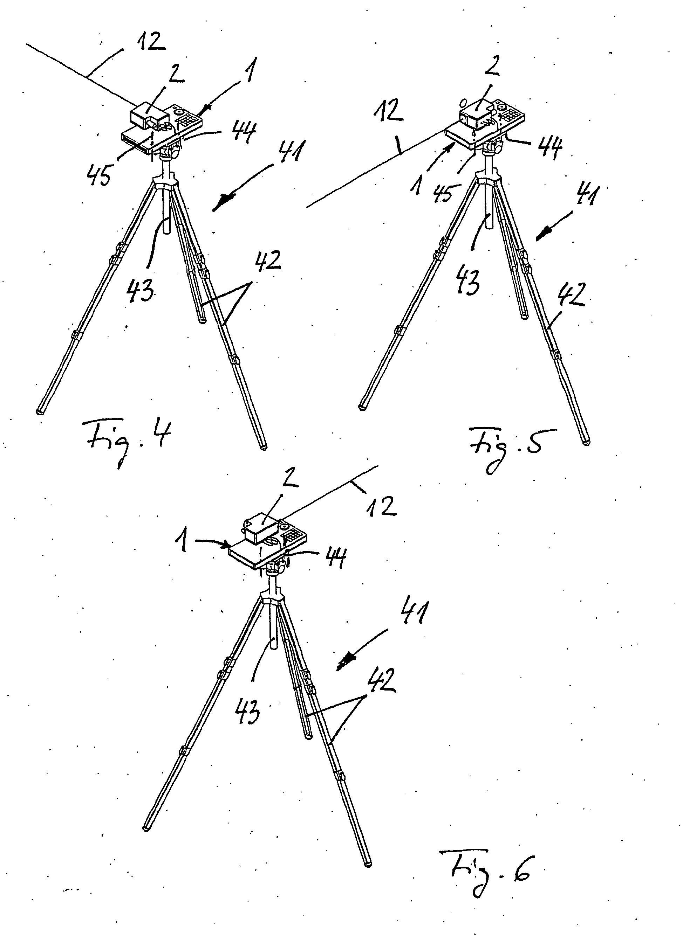

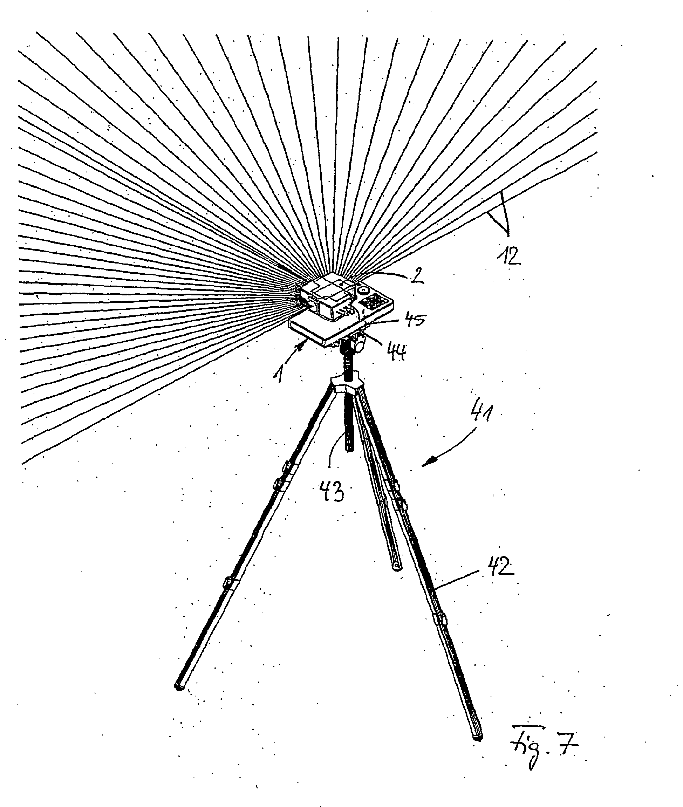

Fig. 4 bis 6 zeien ein zur Montage der beschriebenen Vorrichtung geeignetes Stativ 41, das beispielsweise drei Beine 42 aufweist und mit einer von diesen gehaltenen, mittleren Tragstange 43 versehen ist, an deren oberen Ende eine Montageplatte 44 od. dgl. befestigt ist. Das Stativ 41 ist vorzugsweise wie ein übliches Kamerastativ ausgebildet, in welchem Fall die Beine 42 verschwenkbar und teleskopisch ausziehbar sind, die Tragstange 43 in der Höhe verstellt werden kann und die Montageplatte 44 um zwei senkrecht zueinander stehende Achsen relativ zur Tragstange 43 verschwenkbar gelagert ist. Außerdem ist die Montageplatte 44 und/oder der Grundkörper 1 mit Befestigungselementen 45 in Form von Schrauben und zugehörigen Bohrungen od. dgl. versehen, mittels derer der Grundkörper 1 an der Montageplatte 44 befestigt werden kann. Da die Montageplatte 44 in zwei Richtungen schwenkbar gelagert ist und zusammen mit der Tragstange 43 bzw. den Beinen 42 auf- und abbewegt werden kann, kann das Lasermeßgerät 2 nach seiner Befestigung an der Montageplatte 44 weitgehend beliebig und stets so eingestellt werden, daß die Drehachse 8 eine vorgewählte, insbesondere horizontale oder vertikale Stellung einnimmt. Durch Drehen des Lasermeßgeräts 2 kann der Laserstrahl 12 dann analog zu Fig. 3 um z.B. 180° oder mehr gedreht werden und dabei, wie Fig. 7 zeigt, einen entsprechenden Flächenbereich überstreichen. Abgesehen davon kann die Vorrichtung zusammen mit dem Stativ 41 an jedem beliebigen Ort z.B. eines Raums aufgestellt werden.

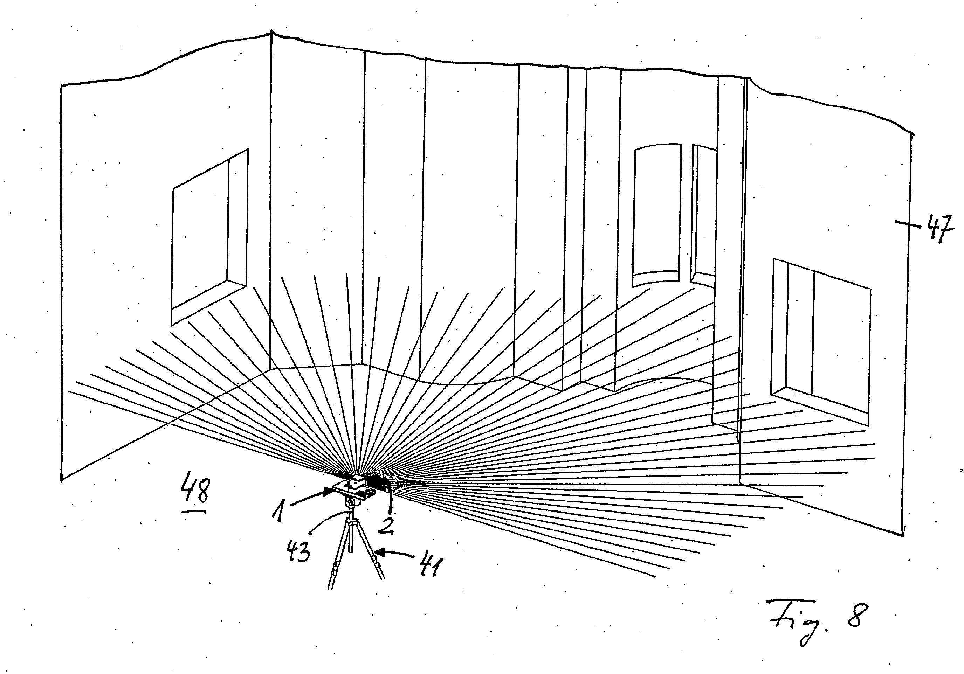

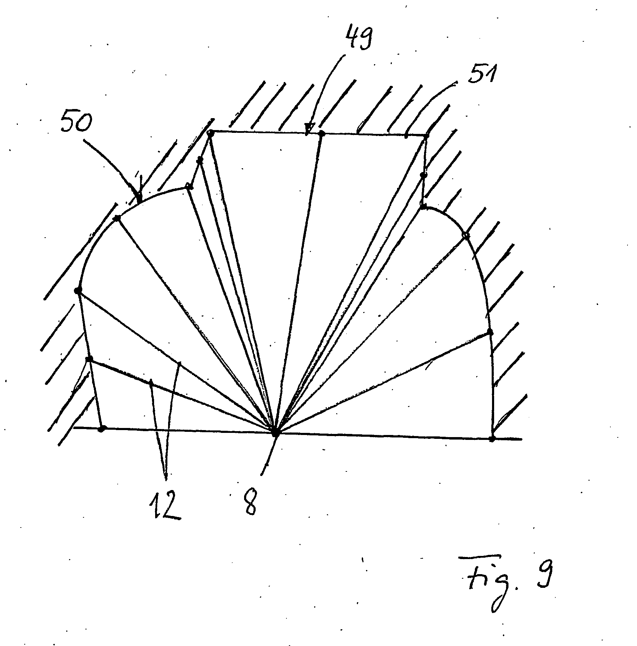

Fig. 8 und 9 zeigen schematisch die Anwendung der Vorrichtung zur Vermessung der Kontur eines vertikalen Wandbereichs 47 innerhalb eines Raums, dessen Boden mit dem Bezugszeichen 48 bezeichnet ist. Der Grundkörper 1 wird zu diesem Zweck analog zu Fig. 4 bis 7 mit seiner Standfläche 15 auf die Montageplatte 44 des Stativs 41 aufgelegt und auf dieser befestigt, wobei in Fig. 9 zur Vereinfachung der Darstellung nur die Lage der Drehachse 8 angedeutet ist. Mittels der entsprechenden Meßmittel 23 bis 26 wird die Drehachse 8 dann vertikal ausgerichtet. Anschließend kann das Lasermeßgerät 2 in der oben beschriebenen Weise zunächst in eine Nullstellung gebracht und dann um 180° oder mehr gedreht werden, um ein genaues Abbild der Wandkontur zu erhalten. Der Laserstrahl bewegt sich dabei in einer senkrecht zur Drehachse 8 und horizontal angeordneten Fläche. Außerdem ist klar, daß die Drehung nicht exakt um 180° erfolgen muß, sondern daß auch eine Drehung um mehr oder weniger als 180° möglich ist.

Das Vermessen einer Wand ist beispielsweise dann sinnvoll, wenn sie analog zu Fig. 9 eine Kontur 49 mit abgerundeten Abschnitten 50, Aussparungen 51 nach Art eines Erkers und/oder sonstigen Unregelmäßigkeiten aufweist und diese Teile beispielsweise mit An- oder Einbaumöbeln od. dgl. versehen werden sollen. Es ist dann möglich, die von den Meßpunkten erhaltenen Meßdaten mittels einer Diskette od. dgl. einer Maschine zuzuführen, die bei der Herstellung der Möbel automatisch die ermittelte Kontur 49 nachbildet.

Soll die Kontur einer Wand nicht in einer mittleren Höhe wie in Fig. 8, sondern in einer wesentlich geringeren Höhe ermittelt werden, kann der Grundkörper 1 anstatt auf die Montageplatte 44 des Stativs 41 auch direkt auf den Boden 48 aufgelegt und auf diesem ausgerichtet werden. Eine Drehung um 180° oder auch um 360° liefert dann Meßdaten, die sich z.B. zum exakten Zuschneiden von Sockelleisten, Teppichböden od. dgl. eignen.

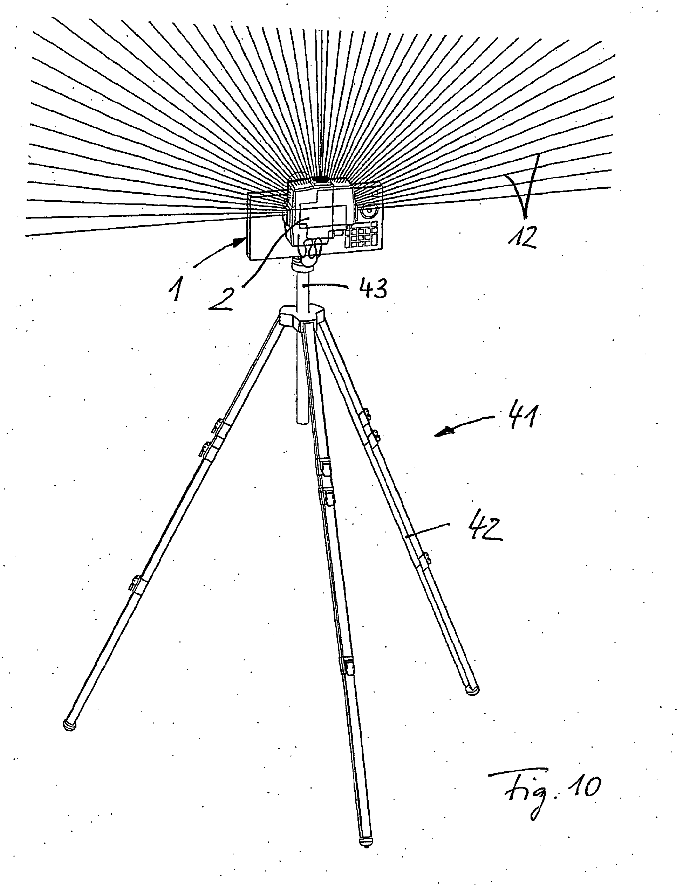

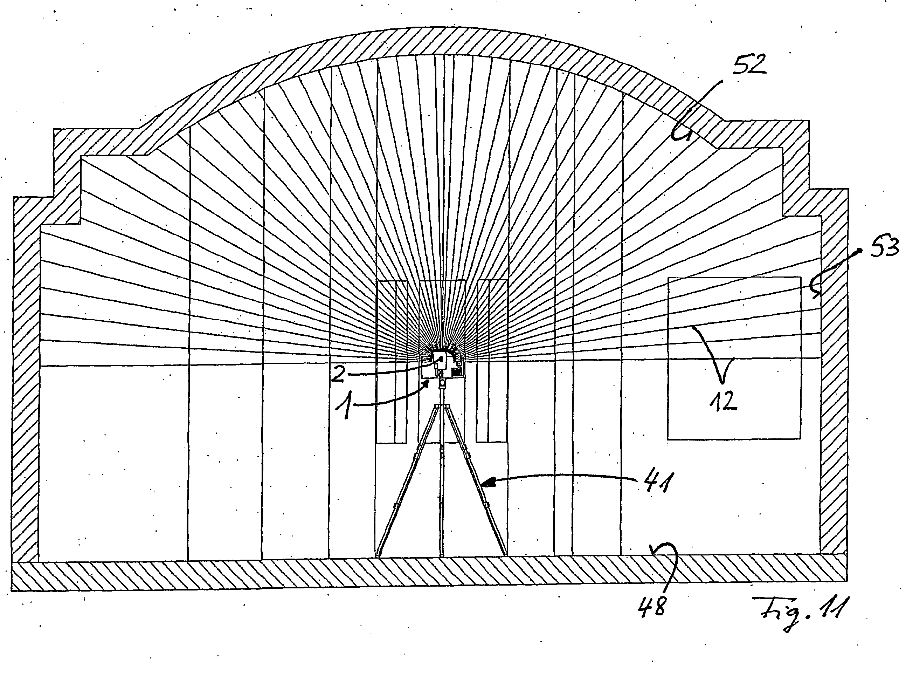

Fig. 10 und 11 zeigen schließlich die Anwendung der erfindungsgemäßen Vorrichtung zur Vermessung eines Deckenbereichs 52 eines Raums, wobei mit dem Bezugszeichen 48 wiederum der Boden des Raums bezeichnet ist. Im Unterschied zu Fig. 8 und 9 wird der Grundkörper 1 in diesem Fall z.B. mit seiner Grundfläche 14 auf die Montageplatte 44 des Stativs 41 aufgelegt und an dieser befestigt. Die Ausrichtung erfolgt dann so, daß die Drehachse 8 genau horizontal angeordnet ist. Wie in den oben beschriebenen Beispielen kann dann durch Drehen des Lasermeßgeräts 2 die exakte Kontur des Deckenbereichs 52 ermittelt werden, und zwar je nach Bedarf mit oder ohne Einschluß eines angrenzenden Wandbereichs 53. Denkbar wäre es auch hier, den Grundkörper 1 mit seiner Standfläche 14 auf den Boden 48 anstatt auf die Montageplatte 44 aufzulegen.

Es gibt Fälle, in denen eine Kontur mit nach Art von Hinterschneidungen ausgebildeten Aussparungen od. dgl. derart versehen ist, daß von einem bestimmten Aufstellungsort der Vorrichtung aus nicht alle Wand- oder Deckenteile für den Laserstrahl 12 zugänglich sind. In derartigen Fällen ist es jedoch möglich, die Kontur von zwei oder mehr Orten aus zu vermessen und aus den dadurch erhaltenen Teilen der Kontur den richtigen Konturverlauf mit Hilfe der Software zusammenzusetzen.

Zum Anschluß der beschriebenen Vorrichtung an ein Stromnetz ist der Grundkörper 1 zweckmäßig mit einem geeigneten Anschlußkontakt wie z.B. einen Stecker oder einer Buchse versehen, an den ein Anschlußkabel 54 (z.B. Fig. 1) angeschlossen wird. Eine besonders bevorzugte Variante sieht allerdings vor, die Vorrichtung mit einer im Grundkörper 1 untergebrachten Batterie zu betreiben, um dadurch vom Anschlußkabel 54 unabhängig zu werden, das Drehungen des Lasermeßgeräts 2 um 360° und mehr behindern könnte. In diesem Fall ist es zweckmäßig, die Anordnung so zu treffen, daß die Vorrichtung dennoch mittels des Anschlußkabels 54 an das Stromnetz angeschlossen werden kann, um die Batterie wieder aufzuladen.

Die Erfindung ist nicht auf die beschriebenen Ausführungsbeispiele beschränkt, die auf vielfache Weise abgewandelt werden können. Insbesondere ist es möglich, die Standflächen 14 bis 17 anders als dargestellt auszubilden. Insbesondere brauchen die Standflächen nicht wie in den Zeichnungen aus zusammenhängenden Flächen bestehen. Sie könnten vielmehr auch aus einzelnen Füßen, Kanten Ansätzen od. dgl. zusammengesetzt sein oder bestehen, die in irgendeiner zweckmäßigen Weise am Grundkörper 1 angebracht sind. Wichtig erscheint nur, daß jede Standfläche der gesamten Vorrichtung einen festen Stand verleiht. Ferner kann softwaremäßig vorgesehen sein, jeder Standfläche ein anderes Arbeits- oder Rechenprogramm zuzuordnen, um die erhaltenen Meßdaten z.B. statt auf die beschriebenen, durch die Drehachse 8 verlaufende Nullinie auf eine zugeordnete, mit Abstand von der Drehachse angeordnete Standfläche (z.B. 14, 16 oder 17) zu beziehen. In diesem Fall ist der Grundkörper 1 zweckmäßig mit einem zusätzlichen Programmschalter versehen, um die Vorrichtung vor Beginn der Vermessung auf das gewünschte Programm und die zugehörige Standfläche oder Bezugslinie umschalten zu können. Außerdem können andere als die dargestellten Mittel zur Positionierung und Ausrichtung des Grundkörpers 1 vorgesehen werden. Weiter ist klar, daß der Drehbereich für das Lasermeßgerät 2 an sich beliebig gewäht werden kann, vorzugsweise allerdings 180° oder mehr beträgt. Schließlich versteht sich, daß die verschiedenen Merkmale auch in anderen als den in den Ausführungsbeipielen beschriebenen und dargestellten Kombinationen angewendet werden können und die Erfindung auch für die beschriebenen Anwendungen der Vorrichtung beim Vermessen von Konturen anwandbar ist.

## Patentansprüche

1. Vorrichtung zum Vermessen von zweidimensionalen Konturen mit einem Grundkörper (1), an dem ein Lasermessgerät (2) um eine Drehachse (8) drehbar gelagert ist und ein Drehmittel (9) zum Drehen des Lasermessgeräts (2) um die Drehachse (8) sowie Mittel zur automatischen Erfassung der vom Lasermessgerät (2) ermittelten Entfernungsdaten in Abhängigkeit von dessen jeweiliger Drehstellung aufweisst, wobei der Grundkörper (1) eine erste zum Aufstellen der Vorrichtung bei im wesentlichen vertikaler Anordnung der Drehachse (8) bestimmte Standfläche (15) aufweist, **dadurch gekennzeichnet, dass** der Grundkörper eine zweite, zu ihrer Aufstellung bei im wesentlichen horizontaler Anordnung der Drehachse (8) bestimmte Standfläche (14) besitzt und die zweite Standfläche (14) im Gegensatz zur ersten Standfläche (15) parallel und mit einem solchen Abstand zur Drehachse (8) angeordnet ist, dass sie außerhalb eines gedachten Drehkreises (2a) liegt den der am weitesten von der Drehachse (8) entfernte Punkt des Lasermessgeräts (2) beschreibt, sodass das Lasermessgerät (2) die Drehung um die Drehachse (8) zu vollführen in der Lage ist.

2. Vorrichtung nach Anspruch 1, **dadurch gekennzeichnet, dass** die Drehachse (8) parallel zur z-Achse eines gedachten xyz-Koordinatensystems liegt und die erste Standfläche (15) parallel zur xy-Ebene und die zweite Standfläche (14) parallel zur yz-Ebene dieses Koordinatensystems angeordnet ist.

3. Vorrichtung nach Anspruch 1 oder 2, **dadurch gekennzeichnet, dass** der Grundkörper (1) mit Meßmitteln (23 bis 26) zur Überprüfung der vertikalen und horizontalen Ausrichtung der Drehachse (8) versehen ist.

4. Vorrichtung nach Anspruch 3, **dadurch gekennzeichnet, dass** die Meßmittel (23 bis 26) elektronische Winkelmess- und/oder Nivelliereinrichtungen enthalten.

5. Vorrichtung nach einem der Ansprüche 1 bis 4, **dadurch gekennzeichnet, dass** das Mittel (9) zum Drehen des Lasermessgeräts (2) einen Schritt- oder Servomotor enthält.

6. Vorrichtung nach einem der Ansprüche 1 bis 5, **dadurch gekennzeichnet, dass** der Grundkörper (1) mit wenigstens einer dritten, senkrecht zur ersten und zweiten Standfläche (14, 15) angeordneten Standfläche (16, 17) versehen ist.

7. Vorrichtung nach einem der Ansprüche 1 bis 6, **dadurch gekennzeichnet, dass** wenigstens eine Standfläche (14 bis 17) einstellbar ist.

8. Vorrichtung nach einem der Ansprüche 1 bis 7, **dadurch gekennzeichnet, dass** am Grundkörper (1) ein Datenspeicher für die Messdaten und die zugehörigen Drehwinkeldaten angeordnet ist.

9. Vorrichtung nach Anspruch 8, **dadurch gekennzeichnet, dass** am Grundkörper (1) eine mit dem Speicher verbundene Schnittstelle (22) zum Anschluss eines Datenverarbeitungsgeräts angeordnet ist.

10. Vorrichtung nach einem der Ansprüche 1 bis 9, **dadurch gekennzeichnet, dass** sie mit einer am Grundkörper (1) angeordneten Batterie betreibbar ist, und oder
dass sie mit einem zum Anschluss an ein Stromnetz bestimmten Anschlusskontakt versehen ist.

11. Vorrichtung nach Anspruch 10, **dadurch gekennzeichnet, dass** sie wahlweise mit der Batterie oder über das Stromnetz unter gleichzeitiger Aufladung der Batterie betreibbar ist.

12. Vorrichtung nach einem der Ansprüche 1 bis 11, **dadurch gekennzeichnet, dass** sie ein mit einer Montageplatte (44) für den Grundkörper (1) versehenes Stativ (41) enthält.

13. Vorrichtung nach Anspruch 12, **dadurch gekennzeichnet, dass** der Grundkörper (1) mit zu seiner Befestigung am Stativ (41) bestimmten Befestigungselementen (45) versehen ist.

14. Vorrichtung nach Anspruch 12 oder 13, **dadurch gekennzeichnet, dass** die Montageplatte (44) in wenigstens drei Richtungen einstellbar ist.

15. Vorrichtung nach einem der Ansprüche 1 bis 14, **dadurch gekennzeichnet, dass** das Lasermessgerät (2) um 360° um die Drehachse (8) drehbar ist.

## Claims

1. Device for measuring two-dimensional contours having a base body (1), on which base body (1) a laser measuring instrument (2) is pivoted about a swiveling axis (8) and has a swiveling means (9) for swiveling the laser measuring instrument (2) about the swiveling axis (8) and means for automatically acquiring distance data in dependence on the respective swiveling position of the laser measuring instrument (2), said distance data being determined by the laser measuring instrument (2), wherein the base body (1) has a first base surface (15) for putting the device up in such a manner that the swiveling axis (8) is essentially vertically arranged, **characterized in that** the base body has a second base surface (14) for putting the device up in such a manner that the swiveling axis (8) is essentially horizontally arranged, and the second base surface (14) is arranged, in contrast to the first base surface (15), parallel to the swiveling axis (8) and at such a distance therefrom that it is outside an imaginary swiveling radius (2a) described by that point of the laser measuring instrument (2) which has the greatest distance from the swiveling axis (8) so that the laser measuring instrument (2) is capable of swiveling about the swiveling axis (8).

2. Device according to claim 1, **characterized in that** the swiveling axis (8) is arranged parallel to the z-axis of an imaginary xyz coordinate system and the first base surface (15) is arranged parallel to the xy-plane and the second base surface (14) is arranged parallel to the yz-plane of said coordinate system.

3. Device according to claim 1 or 2, **characterized in that** the base body (1) is provided with measuring means (23 to 26) for checking the vertical and the horizontal orientation of the swiveling axis (8).

4. Device according to claim 3, **characterized in that** the measuring means (23 to 26) contain electronic angle measuring and/or leveling appliances.

5. Device according to any one of claims 1 to 4, **characterized in that** the means (9) for swiveling the laser measuring instrument (2) contains a stepper or servo motor.

6. Device according to any one of claims 1 to 5, **characterized in that** the base body (1) is provided with at least one third base surface (16, 17) that is arranged perpendicular to the first and second base surfaces (14, 15).

7. Device according to any one of claims 1 to 6, **characterized in that** at least one base surface (14 to 17) is adjustable.

8. Device according to any one of claims 1 to 7, **characterized in that** a memory for the measured data and the associated swiveling angle data is arranged on the base body (1).

9. Device according to claim 8, **characterized in that** an interface (22) for connecting a data processing device is arranged on the base body (1), said interface (22) being connected to the memory.

10. Device according to any one of claims 1 to 9, **characterized in that** it is operatable by means of a battery arranged on the base body (1) and/or that it is provided with a connector for establishing a connection to an electric grid.

11. Device according to claim 10, **characterized in that** it is optionally operatable by means of the battery or via the electric grid with simultaneous charging of the battery.

12. Device according to any one of claims 1 to 11, **characterized in that** it contains a tripod (41) provided with a mounting plate (44) for the base body (1).

13. Device according to claim 12, **characterized in that** the base body (1) is provided with fastening elements (45) for fastening the base body (1) on the tripod (41).

14. Device according to claim 12 or 13, **characterized in that** the mounting plate (44) is adjustable in at least three directions.

15. Device according to any one of claims 1 to 14, **characterized in that** the laser measuring instrument (2) is swivelable about the swiveling axis (8) by 360°.

## Revendications

1. Dispositif de mesure de contours en deux dimensions avec un corps de base (1) sur lequel repose un laséromètre (2) en rotation autour d'un axe de rotation (8) et qui présente un moyen de rotation (9) pour la mise en rotation du laséromètre (2) autour de l'axe de rotation (8) ainsi que des moyens de détection automatique des données de distance déterminées par le laséromètre (2) en fonction de sa position de rotation respective, le corps de base (1) présentant une première surface d'appui (15) définie pour le placement du dispositif lors de la disposition essentiellement verticale de l'axe de rotation (8), **caractérisé en ce que** le corps de base présente une deuxième surface d'appui (14) définie pour sa position lors de la disposition essentiellement horizontale de l'axe de rotation (8), et **en ce que** la deuxième surface d'appui (14), contrairement à la première surface d'appui (15), est disposée parallèlement à l'axe de rotation (8) et à une distance telle de l'axe de rotation (8) qu'elle se situe à l'extérieur d'un cercle de rotation imaginaire (2a) que décrit le point du laséromètre (2) qui est le plus éloigné de l'axe de rotation (8), de sorte que le laséromètre (2) est en mesure d'effectuer complètement la rotation autour de l'axe de rotation. (8).

2. Dispositif selon la revendication 1, **caractérisé en ce que** l'axe de rotation (8) est situé parallèlement à l'axe z d'un système de coordonnées xyz imaginaire, et **en ce que** la première surface d'appui (15) est disposée parallèlement au plan xy, et **en ce que** la deuxième surface d'appui (14) est disposée parallèlement au plan yz de ce système de coordonnées.

3. Dispositif selon la revendication 1 ou 2, **caractérisé en ce que** le corps de base (1) est muni de moyens de mesure (23 à 26) pour la vérification de l'orientation verticale et horizontale de l'axe de rotation (8).

4. Dispositif selon la revendication 3, **caractérisé en ce que** les moyens de mesure (23 à 26) contiennent des équipements électroniques de mesure d'angle et/ou de nivellement.

5. Dispositif selon une des revendications 1 à 4, **caractérisé en ce que** le moyen (9) de mise en rotation du laséromètre (2) contient un moteur pas à pas ou un servomoteur.

6. Dispositif selon une des revendications 1 à 5, **caractérisé en ce que** le corps de base (1) est muni d'au moins une troisième surface d'appui (16, 17) disposée perpendiculairement à la première et à la deuxième surface d'appui (14, 15).

7. Dispositif selon une des revendications 1 à 6, **caractérisé en ce qu'**au moins une surface d'appui (14 à 17) est réglable.

8. Dispositif selon une des revendications 1 à 7, **caractérisé en ce que**, sur le corps de base (1), il est disposé une mémoire de données pour les données de mesure et pour les données d'angle de rotation correspondantes.

9. Dispositif selon la revendication 8, **caractérisé en ce que**, sur le corps de base (1), il est disposé une interface (22) raccordée à la mémoire pour le raccordement d'un appareil de traitement de données.

10. Dispositif selon une des revendications 1 à 9, **caractérisé en ce qu'**il peut fonctionner avec une batterie disposée sur le corps de base (1), et/ou **en ce qu'**il est muni d'un contact de raccordement défini pour le raccordement à un réseau électrique.

11. Dispositif selon la revendication 10, **caractérisé en ce qu'**il peut fonctionner au choix avec la batterie ou par le biais du réseau électrique avec chargement simultané de la batterie.

12. Dispositif selon une des revendications 1 à 11, **caractérisé en ce qu'**il contient un support (41) muni d'une plaque de montage (44) pour le corps de base (1).

13. Dispositif selon la revendication 12, **caractérisé en ce que** le corps de base (1) est muni d'éléments de fixation (45) définis pour sa fixation sur le support (41).

14. Dispositif selon la revendication 12 ou 13, **caractérisé en ce que** la plaque de montage (44) est réglable dans au moins trois directions.

15. Dispositif selon une des revendications 1 à 14, **caractérisé en ce que** le laséromètre (2) peut tourner de 360° autour de l'axe de rotation (8).
